# EUROPEAN PATENT APPLICATION

(11) **EP 4 002 171 A1**
(43) Date of publication of application: **25.05.2022**
(21) Application number: 21188445.7
(22) Date of filing: 29.07.2021
(51) Int. Cl.: G06F 21/52

(54) **METHOD AND DEVICE OF HANDLING SECURITY OF AN OPERATING SYSTEM**

(30) Priority: 19.11.2020 US 202063115622 P; 15.07.2021 US 202117376182
(71) Applicant: Moxa Inc., New Taipei City 231 (TW)
(72) Inventor: TAN, YOONG TAK, 231 New Taipei City (TW)
(74) Representative: Straus, Alexander

(57) **Abstract**

A method of handling security of an operation system comprises turning on an unlocked mode of the operating system, and turning off an interactive mode of the operating system; recording a plurality of activities in the operating system in a list; creating a security threat model for the operating system according to the plurality of activities; performing a first system test on the security threat model; and turning off the unlocked mode, and turning on the interactive mode.

## Description

### Field of the Invention

The present invention relates to a method and device of handling security of an operating system.

### Background of the Invention

Over the past years, various Linux security modules (LSMs) have been developed on Linux distributions, such as Security-Enhanced Linux (SELinux), Application Armor (Apparmor), Simplified Mandatory Access Control Kernel (Smack), and Tomoyo project. But there is a need for improvement of the LSMs nevertheless. In detail, high entry barriers of the LSMs have deterred most of developer(s) (e.g., security developer). It is difficult for those with little understanding of Linux system behavior(s) and security thread model(s) to maintain the LSMs to protect Linux software.

In most cases, development of the LSMs is involved in a post product development stage, i.e., after software development is completed.

Take an embedded device (e.g., a network-attached storage (NAS) appliance) as an example, security developer(s) may need to develop a bunch of rules for defining (e.g., restricting) access and transition rights (authorities) of user(s), user space application(s), process(es), director(ies) and (configuration) file(s) in an operating system. That is, the rules are for preventing the user space application(s) and the file(s) from threats (e.g., unauthorized process(es)). To achieve this goal, the security developer(s) may need to get a deeper understanding of each process to prevent the threats.

Thus, how to efficiently develop the rules while allowing adjusting (e.g., tune, refine) granularity of the rules is an important problem to be solved.

### Summary of the Invention

The present invention therefore provides a method for handling security of an operation system to solve the abovementioned problem.

This is achieved by a method and device for handling the security of the operation system according to the independent claim here below. The dependent claims pertain to corresponding further developments and improvements.

As will be seen more clearly from the detailed description following below, the claimed method of handling security of an operation system comprises turning on an unlocked mode of the operating system, and turning off an interactive mode of the operating system; recording a plurality of activities in the operating system in a list; creating a security threat model for the operating system according to the plurality of activities; performing a first system test on the security threat model; and turning off the unlocked mode, and turning on the interactive mode.

### Brief Description of the Drawings

Fig. 1 is a schematic diagram of a device according to an example of the present invention.
Fig. 2 is a flowchart of a process according to an example of the present invention.
Fig. 3 is a schematic diagram of comparison of rule development flows according to the prior art and an example of the present invention.
Fig. 4 is a schematic diagram of a list according to an example of the present invention.
Fig. 5 is a flowchart of a process according to an example of the present invention.
Fig. 6 is a schematic diagram of a list according to an example of the present invention.
Fig. 7 is a flowchart of a process according to an example of the present invention.

### Detailed Description

The present invention discusses whether it is possible to develop an auto generation secure module policy based on real time scenario, whether there is an alternative approach to replace concept of rules, and whether a secure module policy supports interaction(s) with security developer(s) (e.g., adding new rule(s) or requesting for permission) under safe conditions.

Issues regarding conventional secure modules (e.g., Security-Enhanced Linux (SELinux), Application Armor (Apparmor)) are stated as follows.

Issue (A): Environment complexity of an operating system is high, and it is difficult to apply rules to protect application(s) and/or file(s) of the operating system. For example, after software developer(s) completes developing software(s) on a Linux box (e.g., appliance, product, device), the Linux box is provided to security developer(s) for developing security module(s) for protecting the software(s). In one example, the Linux box comprises a NGINX (web) server for Linux user(s) to configure setting(s), a Samba server for file sharing(s), a simple network management protocol (SNMP) server for remote setting(s), and/or a Syslog server for tracking system record(s).

In order to create (e.g., develop, generate, determine, establish, build) a security threat model, the security developer(s) may need to understand (all) processes running in the Linux box, and how each process interacts with the operating system and other process(es). Then, the security developer(s) creates rules based on the security threat model. In one example, the security developer(s) creates the rules to restrict process(es) to access certain system resource(s), e.g., the Syslog server. In one example, the Syslog server is allowed (or restricted) to create files under /var/log/*.log, with WRITE permission only, to create only a localhost 514 user datagram protocol (UDP) port, and/or to receive other application log message(s). In one example, the rules comprise whether a hash of an application (e.g., program) is correct, whether the application is allowed to access (or read) specific file(s), and/or whether the application is allowed to be performed at a specific timing.

Note that log message files in the Syslog server may grow up over time, and Logrotate daemons are designed for the operating system to handle compression of the files. The log message files need a permission rule(s) MOVE (DELETE/CREATE/READ/WRITE) to move the files. In addition, the NGINX server needs a permission rule READ to show context(s), when the Linux user logins via a web page.

After the security developer(s) figure out all crossover relations and permission rules, system (integration) test tester(s) may start to apply the created rules to the operating system, and perform a (end-to-end) system test to test the Linux box.

However, the Linux box may fail to pass the system test. The security developer(s) and the software developer(s) need to figure out what happened to the operating system. That is, development of the rules may fall into a loop. It turns out that the NGINX server needs permission rule(s) to interact with the 514 UDP port for logging message(s) of the NGINX server.

In short, it is difficult for the security developer(s) to develop the security modules because of the high complexity environment involved.

Issue (B): Concepts of the security modules are difficult. In detail, user, rule, level, file/category, labeling and hats are security development concepts with specific tools, and it is difficult for the software developer(s) to understand (or learn) these concepts. Most of companies may not have the security developer(s) to rely on.

Issue (C): Credential of a super user (e.g., root) may be corrupted or modified by intruder(s) (e.g., unauthorized process(es)). Thus, it is necessary to bind rules with hardware Root of Trust (RoT) to assure system integrity. To achieve this goal, the super user may not be allowed to change corresponding rule(s) under a "production" environment. Rules are applied during a secure boot process, and highly depend on the hardware RoT.

Issue (D): Rules are not developed in real time. In detail, the rules are developed at a post product development stage. That is, the security developer(s) may understand whether the rules are developed successfully, after the system test is performed. Note that a real time interaction feedback mechanism provides an easier way to understand what happened to the operating system (e.g., by the system test tester(s)).

Issue (E): Different perspectives of software protection. In some privacy scenarios, a user space application (e.g., task) may be restricted from accessing first resource(s), and second resource(s) may be restricted from accessing the user space application. The first resource(s) and the second resource(s) may be the same or different. For example, private library(ies)/program(s) is allowed to be accessed by certain process(es) (e.g., program(s), application(s)), while being prevented from piracy. In one example, an "upgrade-firmware" command, instead of a "dd" command, may be allowed to upgrade system firmware, and integrity of the "upgrade-firmware" command is concerned.

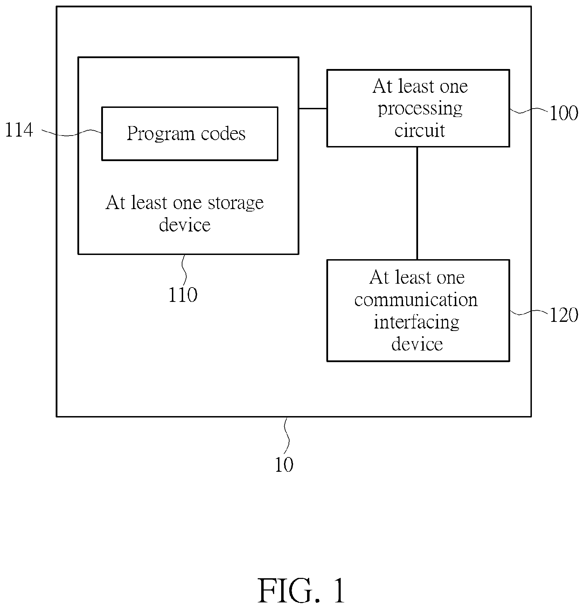

Fig. 1 is a schematic diagram of a device 10 according to an example of the present invention. The device 10 may be a user equipment (UE), a low cost device (e.g., machine type communication (MTC) device), a device-to-device (D2D) communication device, a narrow-band internet of things (IoT) (NB-IoT) device, a mobile phone, a laptop, a tablet computer, an electronic book, a portable computer system, a computer, a server, or combination thereof. The device 10 may perform (e.g., run, operate) any operating system, such as Linux, Microsoft Windows, Android and is not limited herein. The device 10 may provide (e.g., comprise, support) interface(s) for accessing kernel(s) of (or in) the operating system.

The device 10 may include at least one processing circuit 100 (e.g., Advanced RISC Machine (ARM), millions of instructions per second (MIPS), X86), at least one storage device 110 and at least one communication interfacing device 120. The at least one storage device 110 may be any data storage device that may store program codes 114, accessed and executed by the at least one processing circuit 100. Examples of the at least one storage device 110 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 120 is preferably at least one transceiver and is used to transmit and receive signals (e.g., data, messages and/or packets) according to processing results of the at least one processing circuit 100.

In the present invention, update or change of rule(s) (e.g., polic(ies)) may be bind tightly with a secure boot process (e.g., hardware RoT, a trusted platform module (TPM)). In addition, a pop up dialogue (in real time) may be used for requesting for permission rules to explain activities. In addition, adjusting granularity of the rules is considered in the present invention to fulfill need of a fine-grain scenario.

A design concept of a security module HoneyBest in the present invention is stated as follows. First, an "unlock" (e.g., unfreeze) operation is performed on a Linux box in a security environment. Activities in a kernel space (i.e., kernel activities) triggered by a user space application (e.g., program) are recorded (e.g., captured, tracked). The recorded activities are stored in (or turned into) a list (which may be a data structure) (e.g., a security threat model) for the security module HoneyBest to detect an unexpected (occurred) event (e.g., unrecorded activities). Then, a "lock" (e.g., freeze) operation is performed on the Linux box. A size of the list tightly depends on (relates to) a level of granularity of the rules. The higher the level (i.e., more precise (finer) restriction or control) is selected, the larger the space needed for saving the list. That is, the activities are recorded for creating the security threat model.

In one example, the activities are restricted to the security threat model, if (e.g., when, after, once) the Linux box is locked (e.g., frozen).

Note that some activities (e.g., unrecorded activities) may not be able to be performed in the security environment, and the security threat model with a higher level of granularity should be considered. That is, more activities should be recorded. Then, using an editor to edit the security threat model, turning on the interactive mode (e.g., state) or a pop up dialogue may be selected (or used) for requesting for the new activit(ies) (e.g., unrecorded activities) in the real world scenario.

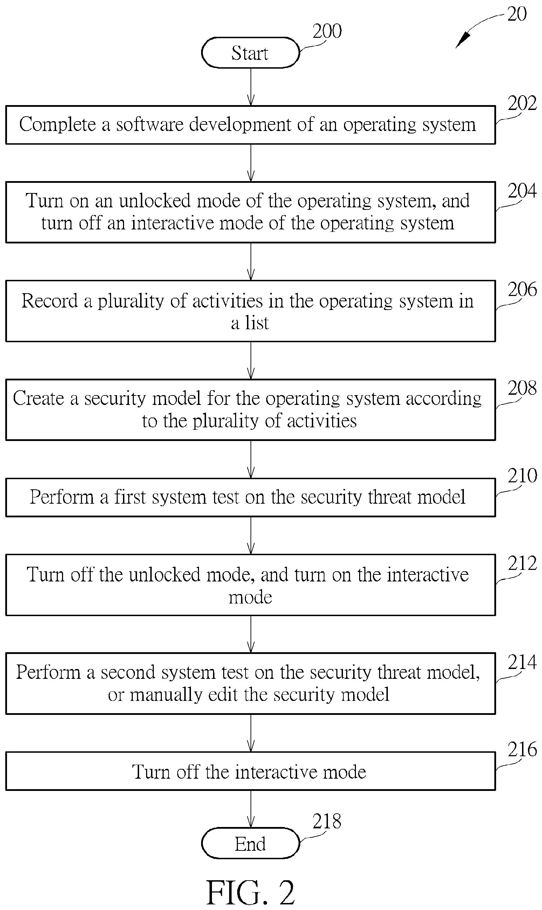

Fig. 2 is a flowchart of a process 20 according to an example of the present invention. The process 20 may be utilized in the device 10, to handle security of an operating system (e.g., software) of a Linux box. The process 20 may be compiled into the program codes 114 and includes the following steps:
Step 200: Start.
Step 202: Complete a software development of an operating system.
Step 204: Turn on an unlocked mode of the operating system, and turn off an interactive mode of the operating system.
Step 206: Record a plurality of activities in the operating system in a list.
Step 208: Create a security model for the operating system according to the plurality of activities.
Step 210: Perform a first system test on the security threat model.
Step 212: Turn off the unlocked mode, and turn on the interactive mode.
Step 214: Perform a second system test on the security threat model, or manually edit the security model.
Step 216: Turn off the interactive mode.
Step 218: End.

Note that at least one of port(s), a number of the program(s), hash(s) of the program(s), activities (e.g., reading, accessing) performed by the program(s), an execution order of the program(s), timing offset(s) and peripheral equipment(s) (e.g., general-purpose input/output (GPIO), universal serial bus (USB), Ethernet, basic input/output system (BIOS)) may be recorded.

The above operations (e.g., recording, storing, detecting, selecting, unlocking, performing, creating, locking, editing, turning on and/or turning off) may be performed by the Linux box (or a server).

In one example, the security module HoneyBest in the present invention may be an extension kernel module in the device 10. That is, the security module HoneyBest may be comprised in a kernel space. Thus, the security module HoneyBest provides an effective way to simplify a conventional rule development flow of the conventional secure modules.

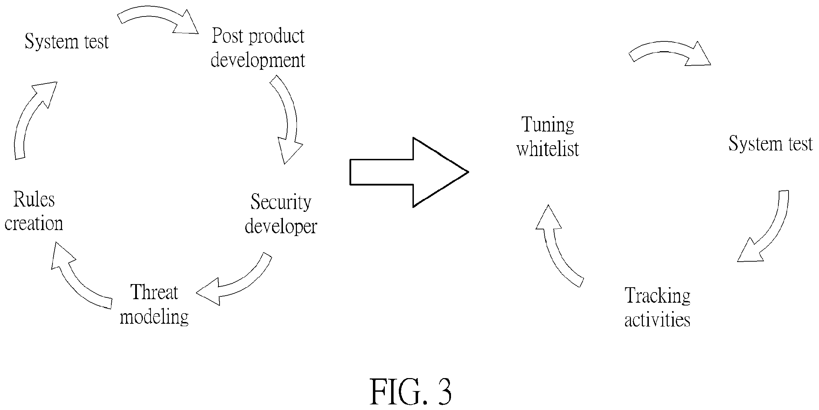

Fig. 3 is a schematic diagram of comparison of rule development flows according to an example of the present invention.

Modes (e.g., stages) of the security module HoneyBest in the present example are detailed as follows.

In one example, there are two enablement (e.g., activation) options for the security module HoneyBest: an enabled (e.g., activated) mode and a disabled (e.g., deactivated) mode. A default enablement mode may be the disabled mode. The enablement (e.g., activation) options are controlled (e.g., turned on) by system test tester(s). In a "production" environment, the enabled mode cannot be turned off, if the enabled mode is turned on.

In one example, two ways for enabling the security module HoneyBest are stated as follows.
1. Add a string hashlock.enabled=1 to a GRand Unified Bootloader (GRUB) parameter.
2. Enable via a command (e.g., echo 1 > /proc/sys/kernel/honeybest/enabled) at an initrd-ramfs stage.

In one example, the security module HoneyBest may not be disabled (i.e., may not enter the disenabled mode) for security reasons (except for a "none production" environment), after the security module HoneyBest is enabled (i.e., enters the enabled mode). Thus, updating a GRUB/initrd image should be designed tightly with a secure boot verification process.

In one example, kernel tracking activities may (start to) be recorded in different files under a directory /proc/honeybest, if the security module HoneyBest is enabled. Developer(s) may monitor the kernel tracking activities via a read file application, e.g., tail/cat/head.

In one example, there are two locking options for the security module HoneyBest: a locked (e.g., frozen) mode and an unlocked (e.g., unfrozen) mode. In one example, a default locking mode is the unlocked mode.

In one example, the locked mode is not available, if the security module HoneyBest is in the disabled mode. In one example, the locked mode is available, if the enabled mode is turned on (i.e., the default locking mode is turned off). In one example, only expected (e.g., recorded) activities are allowed to be performed (e.g., operated, run) in an operating system, if the locked mode is turned on.

In one example, recording activities is not available, if the secure module HoneyBest is in the locked mode.

In one example, a toggle (e.g., transfer) between the locking options may be set (e.g., configured) via a command, e.g., echo 1 > /proc/sys/kernel/honeybest/locking or echo 0 > /proc/sys/kernel/honeybest/locking). That is, the secure module HoneyBest enters the locked mode via the command, e.g., echo 1 > /proc/sys/kernel/honeybest/locking.

In one example, there are two interaction options for the security module HoneyBest: an interactive mode and a noninteractive mode. In one example, the noninteractive mode is predetermined as a default mode.

In one example, the interactive mode is not available, if the security module HoneyBest is in the disabled mode. In one example, the interactive mode is available, if the enabled mode is turned on.

In one example, a toggle (e.g., transfer) between the interaction options may be set (e.g., configured) via a command, e.g., echo 1 > /proc/sys/kernel/honeybest/interact or echo 0 > /proc/sys/kernel/honeybest/interact. That is, the secure module HoneyBest enters the interactive mode via the command, e.g., echo 1 > /proc/sys/kernel/honeybest/interact. In one example, the secure module HoneyBest enters the noninteractive mode via the command, e.g., echo 0 > /proc/sys/kernel/honeybest/interact.

In one example, there are two options for the interactive mode: a manual mode and an auto mode. In one example, the auto mode is available, if the enabled mode is turned on. In one example, a default interaction mode is the auto mode and all activities occurred in a kernel space (i.e., kernel activities) are being recorded, after the enabled mode is turned on.

In one example, there are two list options for the security module HoneyBest: a whitelist mode and a blacklist mode. A default list mode may be the whitelist mode. Activities (e.g., all activities) recorded in the whitelist may be allowed to pass. These modes may be regarded as an iptables default policy, e.g., DROP and REJECT. For example, the whitelist mode may be regarded as DROP/REJECT, and the blacklist mode may be regarded as ACCEPT.

In one example, a toggle (e.g., transfer) between the list options may be set (e.g., configured) via a command, e.g., echo 1 > /proc/sys/kernel/honeybest/bl or echo 0 > /proc/sys/kernel/honeybest/bl. That is, the secure module HoneyBest enters the blacklist mode via the command, e.g., echo 1 > /proc/sys/kernel/honeybest/bl. The secure module HoneyBest enters the whitelist mode via the command, e.g., echo 0 > /proc/sys/kernel/honeybest/ bl.

Note that some activities (e.g., programs, processes) may be performed, and may be saved in the whitelist. In addition, other activit(ies) may be performed, and may be saved in the blacklist.

In one example, there are three granularity options for the security module HoneyBest: levels 0, 1 and 2. The levels 0-2 represent different granularities for recording activities. The levels 0-2 from high to low are the level 2, the level 1 and the level 0. The higher the level, the more details of the activities are recorded, and the more time is spent during an activity comparison (e.g., match) stage. That is, more time is spent on comparing the recorded activities and occurred activities (e.g., at boot-time).

In one example, a default granularity mode is the level 0, which is suitable to many user cases. In addition, a higher level may cause an environment of the operating system to have lower flexibility.

In one example, a toggle (e.g., transfer) between the granularity options may be set (e.g., configured) via a command, e.g., echo [0, 1, 2] > /proc/sys/kernel/honeybest/level. Configuring activities and recording activities are detailed as follows.

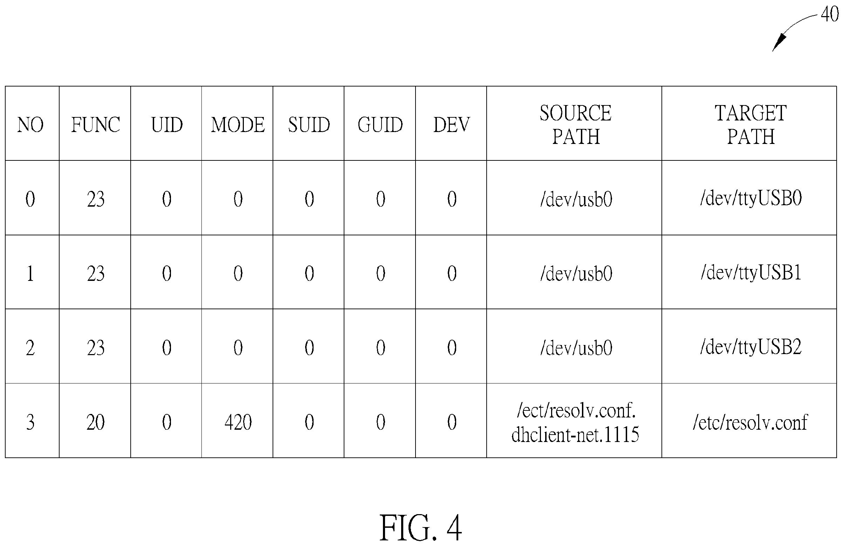

Fig. 4 is a table 40 according to an example of the present invention. Column(s) of the table 40 corresponds to context of activities, e.g., NO, FUNCTION (FUNC), USER ID (UID) and ACTION. Row(s) of the table 40 corresponds to files, e.g., binprm, files, inode, and path. Fig. 4 shows a path file, and is not limited herein. Various contexts are detailed as follows.

The NO represents a sequence index, and is for (e.g., used by) the security module honeybest to compare occurrence activit(ies) from a lower index to a higher index.

The FUNC represents a functional identification, and is for (e.g., used by) the security module honeybest to identify various activities. Under a certain file (e.g., socket), various activities are labeled as listen/bind/accept/open/setsocketopt and so on.

The UID represents a user identification, and is for (e.g., used by) the security module honeybest to reference relation(s) between identity(s) and function(s). This column supports regular expression (RE), digits and asterisk "*").

The ACTION represents a matching action, and has two options: Accept ('A') and Reject ('R'). A default ACTION value depends on the whitelist mode or the blacklist mode. The accept action is appended, if the list option is (under) the whitelist mode. The reject action is appended, if the list option is (under) the blacklist mode.

In one example, various files are comprised in (e.g., under, in) a directory /proc/honeybest. Each of the files is for tracking a respective (e.g., different) behavior of activities. Contexts of the files are detailed as follows.

A binprm file may be for recording all executable file path names belonging to process UID(s). Most importantly, the binprm file may be for transforming file context into HASH to protect the integrity.

A files file may be for recording ordinary file behaviors, e.g., open/read/write/delete/rename.

An inode file may be for recording inode operations, e.g., create/delete/read/update/setxattr/getxattr.

A path file may be for recording behaviors of all types of files, e.g., device node, hard/soft symbolic, directory, pipe, unix socket.

A socket file may be for recording transmission control protocol (TCP)/ user datagram protocol (UDP)/ internet control message protocol (ICMP) socket activities, including port number(s).

A task file may be for recording activities between processes, e.g., signal exchanging(s).

A sb file may be for recording superblock information. Activities such as mount/umount/df are stamped, and is stored in this category. This file is highly related to the files file/path file due to system register/proc information.

A kmod file may be for recording Linux kernel modules activit(ies). Kernel modprobes are stamped, and is stored in this category.

A ptrace file may be for recording ptrace activities.

An ipc file may be for recording Linux internal process communication activities such as shared memory, message queues and semaphore.

A notify file may be for notification(s) between the security module and an application of a user space. In an interactive mode, detection of unexpected events is recorded (e.g., stored) in the notify file for a program of the application to notify the developer(s) later.

A pop up dialogue may be for requesting for activit(ies), and the security developer(s) may allow or ignore the activit(ies). If the interactive mode is turned on, (all) events go through this file may cause memory exhausted. Thus, a design of a READ scheduler for the program is important. Context(s) in the notify file may be cleaned, after each single READ operation is performed (e.g., executed).

Tuning (e.g., adjusting) of a list (e.g., security threat model) is detailed as follows.

The path file (e.g., /proc/honeybest/path) and a symbolic file create activities having high relevance. An example of the path file is stated as follows. The path file is illustrated as a symbolic link, e.g., In -s /etc/services /tmp/services.

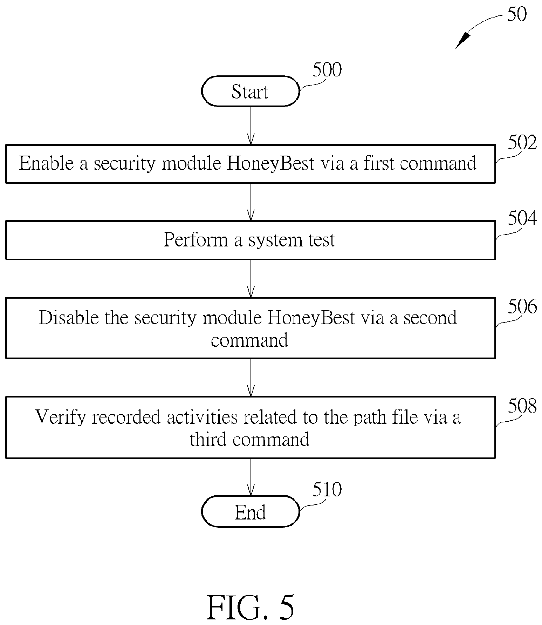

Fig. 5 is a flowchart of a process 50 according to an example of the present invention. The process 50 may be utilized in the device 10, to handle a path file. The process 50 may be compiled into the program codes 114 and includes the following steps:
Step 500: Start.
Step 502: Enable a security module HoneyBest via a first command, e.g., echo 1 > /proc/sys/kernel/honeybest/enabled.
Step 504: Perform (e.g., run) a system test.
Step 506: Disable the security module HoneyBest via a second command, e.g., echo 0 > /proc/sys/kernel/honeybest/enabled.
Step 508: Verify (or review) recorded activities related to the path file via a third command, e.g., cat /proc/honeybest/path | grep services.
Step 510: End.

In the process 50, a list (e.g., whitelist) may indicate that the path file is automatically tracked and stored, if there is an activity related to the path file (e.g., 23 0 0 0 0 0 /etc/services /tmp/services).

Note that the system test may involve udev daemon. That is, a new symbolic file with constant patterns (e.g., /dev/usb0, /dev/usb1,... , and /dev/usb1 linked to /dev/ttyUSB) is constantly accumulated. In this case, multiple duplicated lines related to /dev/ttyUSB are attached into the context of the path file, after enabling the security module HoneyBest. For example, there are three duplicated lines of the list in Fig. 4. Thus, there is an issue regarding matching based on the duplicated lines.

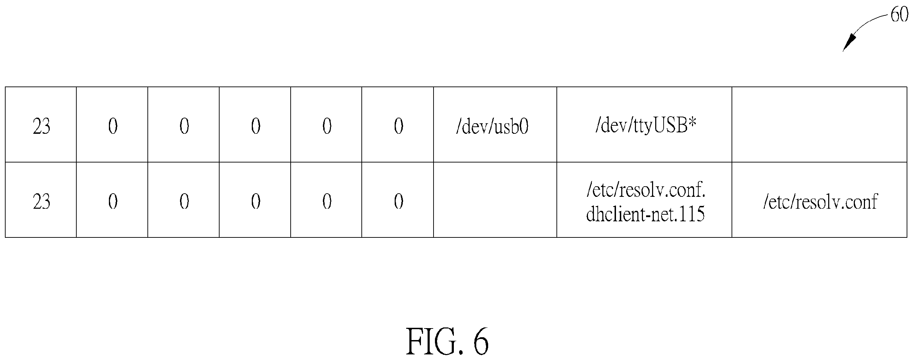

Fig. 6 is a schematic diagram of a list 60 according to an example of the present invention.

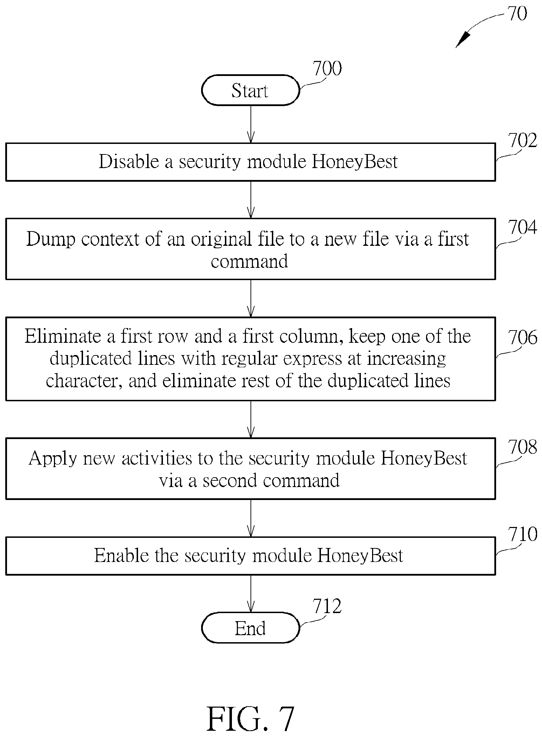

Fig. 7 is a flowchart of a process 70 according to an example of the present invention. The process 70 may be utilized in the device 10, to handle a matching issue. The process 70 may be compiled into the program codes 114 and includes the following steps:
Step 700: Start.
Step 702: Disable a security module HoneyBest.
Step 704: Dump context of an original file (e.g., path file in Fig. 4) to a new file via a first command, e.g., cat /proc/honeybest/path > /etc/hb/path.
Step 706: Eliminate a first row and a first column, keep one of the duplicated lines with regular express at increasing character, and eliminate rest of the duplicated lines. Context of the new file is shown in Fig. 6.
Step 708: Apply new activities (corresponding the new file) to the security module HoneyBest via a second command, e.g., cat /etc/hb/path > /proc/honeybest/path.
Step 710: Enable the security module HoneyBest.
Step 712: End.

Note that a locked mode may be turned on (e.g., by the tester(s)) to verify the (recorded) activities during the system test.

The locked mode may be disabled and the activities may be performed again, if the system test fails.

Comparison of contexts of the files indicates what activity is lost and what activity is needed to be added (e.g., injected).

Performing Step 706 again may be necessary, after saving the context. The security module HoneyBest may not restore correctly, if Step 706 is not performed completely.

The security module HoneyBest described above may be applied in a Linux operating system, and is not limited herein. The security module HoneyBest may be applied in any type of operating system providing an accessing interface, e.g., Microsoft Windows, Android, etc.

In the prevent invention, the terminologies "rule" and "policy" are used interchangeably. The terminologies "create", "design", "develop", "generate", "determine", "establish", and "build" are used interchangeably. The terminologies "event" and "activity" are used interchangeably. The terminologies "file" and "category" are used interchangeably. The terminologies "store", "restore", "dump", and "save" are used interchangeably. The terminologies "lock" and "freeze" are used interchangeably. The terminologies "activate" and "enable" are used interchangeably. The terminologies "record", "capture", and "track" are used interchangeably. The terminologies "perform", "run", and "execute" are used interchangeably. The terminologies "operating system" and "file system" are used interchangeably. The terminologies "Linux operating system" and "Linux box" are used interchangeably.

The operation of "determine" described above may be replaced by the operation of "compute", "calculate", "obtain", "generate", "output, "use", "choose/select" or "decide". The term of "according to" described above may be replaced by "in response to". The phrase of "associated with" described above may be replaced by "of" or "corresponding to". The term of "via" described above may be replaced by "on", "in" or "at". The term "at least one of ... or ..." described above may be replaced by "at least one of ... or at least one of ..." or "at least one selected from the group of ... and ...".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the device 10.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage device) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the device 10.

To sum up, the present invention provides a method for handling security of an operating system. Rules can be developed for protecting the operating system while allowing adjusting granularity of the rules.

## Claims

1. A method of handling security of an operation system, **characterized by** the method comprising
turning on an unlocked mode of the operating system, and turning off an interactive mode of the operating system (204);
recording a plurality of activities in the operating system in a list (206);
creating a security threat model for the operating system according to the plurality of activities (208);
performing a first system test on the security threat model (210); and
turning off the unlocked mode, and turning on the interactive mode (212).

2. The method of claim 1, **characterized in that** the unlocked mode is turned on after completing a software development of the operating system, or the unlocked mode is turned on in a security environment of the operating system.

3. The method of claim 1 or 2, further comprising:
performing a second system test on the security threat model, or manually editing the security threat model; and
turning off the interactive mode.

4. The method of any of claims 1-3, further comprising:
recording at least one of at least one port, a number of at least one program, at least one hash of the at least one program, an execution order of the at least one program, at least one timing offset and at least one peripheral equipment.

5. The method of any of claims 1-4, further comprising:
creating a plurality of rules for protecting the operating system according to the security threat model.

6. The method of claim 6, **characterized in that** a size of the list is related to a level of granularity of rules.

7. The method of any of claims 1-6, **characterized in that** the plurality of activities are occurred in a kernel space of the operating system.

8. A device (10) for handling security of an operation system, **characterized by** the device comprising:
at least one storage device (110); and
at least one processing circuit (100), coupled to the at least one storage device, wherein the at least one storage device stores instructions, and the at least one processing circuit is configured to execute the instructions of:
turning on an unlocked mode of the operating system, and turning off an interactive mode of the operating system (204);
recording a plurality of activities in the operating system in a list (206);
creating a security threat model for the operating system according to the plurality of activities (208);
performing a first system test on the security threat model (210); and
turning off the unlocked mode, and turning on the interactive mode (212).

9. The device of claim 8, **characterized in that** the unlocked mode is turned on after completing a software development of the operating system, or the unlocked mode is turned on in a security environment of the operating system.

10. The device of claim 8 or 9, **characterized in that** the instructions further comprise:
performing a second system test on the security threat model, or manually editing the security threat model; and
turning off the interactive mode.

11. The device of any of claims 8-10, **characterized in that** the instructions further comprise:
recording at least one of at least one port, a number of at least one program, at least one hash of the at least one program, an execution order of the at least one program, at least one timing offset and at least one peripheral equipment.

12. The device of any of claims 8-11, **characterized in that** the instructions further comprise:
creating a plurality of rules for protecting the operating system according to the security threat model.

13. The device of claim 12, **characterized in that** a size of the list is related to a level of granularity of rules.

14. The device of any of claims 8-13, **characterized in that** the plurality of activities are occurred in a kernel space of the operating system.
